Europäisches Patentamt

European Patent Office

Office européen des brevets

(11) Publication number: **0 079 107**
**A1**

# EUROPEAN PATENT APPLICATION

(21) Application number: **82201404.9**

(22) Date of filing: **08.11.82**

(51) Int. Cl.³: **H 04 L 7/02**

(30) Priority: **09.11.81 GB 8133687**

(43) Date of publication of application:
**18.05.83 Bulletin 83/20**

(84) Designated Contracting States:
**DE FR GB SE**

(71) Applicant: **PHILIPS ELECTRONIC AND ASSOCIATED INDUSTRIES LIMITED**
**Arundel Great Court 8 Arundel Street**
**London WC2R 3DT(GB)**

(84) Designated Contracting States:
**GB**

(71) Applicant: **N.V. Philips' Gloeilampenfabrieken**
**Groenewoudseweg 1**
**NL-5621 BA Eindhoven(NL)**

(84) Designated Contracting States:
**DE FR SE**

(72) Inventor: **Vry, Michael Geoffrey**
**c/o PHILIPS RESEARCH LABORATORIES**
**Redhill Surrey RH1 5HA(GB)**

(72) Inventor: **Hale, John Malcolm**
**c/o PHILIPS RESEARCH LABORATORIES**
**Redhill Surrey RH1 5HA(GB)**

(74) Representative: **Andrews, Arthur Stanley et al,**
**Philips Electronic and Associated Industries Limited**
**Patent Department Mullard House Torrington Place**
**London WC1E 7HD(GB)**

(54) Deriving a clock signal from a received digital signal.

(57) An arrangement for deriving a clock signal from a received signal which has been digitally processed in a processing circuit (72) and is available only as a sampled signal at discrete time intervals comprises first and second sample and hold circuits (73, 75) which sample the signal at a multiple of the bit rate so that at least some of the samples are taken at intervals which correspond to nominal zero crossings. A steering circuit (81) driven by a decision circuit (80) determines which of the circuits (73, 75) samples the input signal depending on whether a transition is enclosed by a (1,0) sequence or a (0,1) sequence. The outputs of the sample and hold circuits produce an error signal which is used to control the frequency of an oscillator (78) which drives a timing generator (79). The timing generator (79) controls the instants at which the input signal is sampled both within the processing circuit (72) and the sample and hold circuits (73, 75). An inverter (74) is connected to the input of the sample and hold circuit (75) to enable the same polarity output to be given to a phase retarded signal regardless of the direction of the zero crossing transition.

FIG.7

### "DERIVING A CLOCK SIGNAL FROM A RECEIVED DIGITAL SIGNAL"

The invention relates to a method of and apparatus for deriving a clock signal from a received digital signal which is sampled at discrete time intervals and to data transmission terminals including such apparatus.

In the transmission of binary data by baseband signals the data can be obtained from the received signal by sampling it at the correct instant. To do this it is necessary to derive timing information from the same signal. In order to minimise the errors in the received data it is usually necessary to process the signal in some way to remove, as far as possible, the wide variety of imperfections which can result from transmission. Hitherto this processing has been performed by analogue circuits but increasingly the attractions of digital signal processing, such as dynamic flexibility and the possibility of integration, are leading to digital signal processing being preferred. Since the digital processing can only take place at discrete time-intervals the processed received signal is no longer continuous in time but discrete. This causes difficulties with the extraction of the data which can be overcome by additional analogue filtering; however, this complicates and restricts the design of the receiver, as well as tending to defeat the object of using digital processing.

It is an object of the invention to provide a method of deriving a clock signal from a digitally processed received signal that does not require the use of an analogue filter between the sampling circuit and the clock extraction circuit.

The invention provides a method of deriving a clock signal from a digitally processed received signal which is available as a series of samples at discrete time intervals comprising the steps of sampling the signal at a multiple of the bit rate so that the signal is sampled at a time corresponding to nominal crossings of one or more decision levels of the received signal, using the sampled signal corresponding to the nominal crossings of the decision level(s) to control the frequency of an oscillator, and deriving the clock signal from the oscillator output.

When the data is encoded in the WAL2 code the received signal may be sampled at four times the bit rate. This enables the received signal to be sampled at each nominal zero crossing.

The invention further provides apparatus for deriving a clock signal from a digitally processed received signal which is available as a series of samples at discrete time intervals, the apparatus comprising means for sampling the received signal at a multiple of the bit rate so that the signal is sampled at a time corresponding to nominal crossings of one or more decision levels of the received signal, means for generating a control signal dependent on the magnitude of the signal samples at the time of nominal crossings of the decision level(s), means for applying the control signal to the control input of a controlled oscillator to vary the frequency of the output signal thereform, and means for deriving the clock signal from the oscillator output signal.

The invention still further provides apparatus for deriving a clock signal from a digitally processed received data signal which is available as a series of samples at discrete time intervals, the apparatus comprising means for sampling the received signal at a multiple of the bit rate so that the signal is sampled at a time corresponding to nominal crossings of one or more decision levels of the received signal, means for generating a control signal dependent on the magnitude of the signal samples at the time of nominal crossings of the decision level(s), means for applying the control signal to a control input of a phase shifting circuit which is arranged to produce a phase shifted version of a clock signal applied to its input by a clock generator, the derived clock signal being available at the output of the phase shifting circuit. The phase shifting circuit may comprise a pulse deleter.

By sampling the received signal at a multiple of the bit rate so that the signal is sampled at a time corresponding to nominal crossings of the decision levels of the received signal the necessity for a post sampling filter to enable the crossing instants to be determined is eliminated. Consequently there is no need to mix analogue and digital techniques in the processing of the received signal and this reduces the complexity of the system.

When the apparatus is arranged for deriving the clock signal from a received signal encoded according the WAL2 code the multiple may be four. The received signal is then sampled at each nominal zero crossing. The means for generating the control signal may comprise first and second sample and hold circuits, the sampled received signal being inverted before being fed to one of the sample and hold circuits and means for routing the received signal to either the first or the second sample and hold circuit dependent on the direction of the crossing. The first and second sample and hold circuits may have a common storage capacitor.

The invention further provides a duplex data transmission terminal including apparatus according to the invention for deriving a clock signal from a digitally processed signal. When the duplex data transmission terminal includes an echo canceller the clock generator may drive the transmitter while the derived clock signal drives the echo canceller and receiver.

Embodiments of the invention will now be described, by way of example, with reference to the accompanying drawings, in which:-

Figure 1 shows in block schematic form the basic structure of a data transmission system,

Figure 2 shows a typical input signal to the decision circuit of Figure 1,

Figure 3 shows a data receiver including a digital signal processor,

Figures 4 to 6 shows sampled versions of typical input signals to a decision circuit of a data receiver,

Figure 7 shows in block schematic form apparatus according to the invention, for deriving a clock signal from a digitally processed received signal,

Figure 8 shows a logic '0' and a logic '1' encoded in a particular biphase code,

Figure 9 shows the waveforms at various points in the apparatus shown in Figure 7 when fed with an input signal encoded as shown in Figure 8,

Figure 10a and 10b show a circuit diagram of an embodiment of the arrangement shown in Figure 7,

Figure 11 shows waveforms of timing pulses at various points in the circuit shown in Figure 10,

Figure 12 shows a system for the transmission of signals in two directions which uses an arrangement of deriving clock signals according to the invention,

Figure 13 shows in block schematic form the basic structure of one terminal of the system shown in Figure 12,

Figure 14 shows in greater detail how the echo canceller in Figure 13 interacts with the receiver,

Figure 15 is a more detailed schematic diagram of a terminal in which both the receiver and transmitter clock signals are derived from the received signal,

Figure 16 is a more detailed schematic diagram of a terminal in which the transmitter clock signal is provided by a master oscillator and the receiver clock in a delayed version of the transmitter clock, and

Figure 17 shows an embodiment of the pulse deleter of Figure 16.

In the transmission of binary data by baseband signals the data can be obtained from the received signal by sampling it at the correct instant. To do this it is necessary to derive timing information from the same signal. In order to minimise the errors in the received data it is usually necessary to process the signal in some way to remove, as far as possible, the wide variety of imperfections which can result from transmission. Hitherto this processing has been performed by analogue circuits but increasingly the attractions of digital signal processing such as dynamic flexibility and the possibility of integration, are leading to digital processing being preferred. Since the digital processing can only take place at discrete time-intervals the processed received signal is no longer continuous in time but discrete. This causes difficulties with the extraction of the data which can be overcome by additional analogue filtering. However, this complicates and restricts the design of the receiver, as well as tending to defeat the object of using digital processing.

The method of timing extraction to be described enables both timing information and data to be obtained directly from the discrete-time signal, provided that the digital processing is synchronised with the received signal.

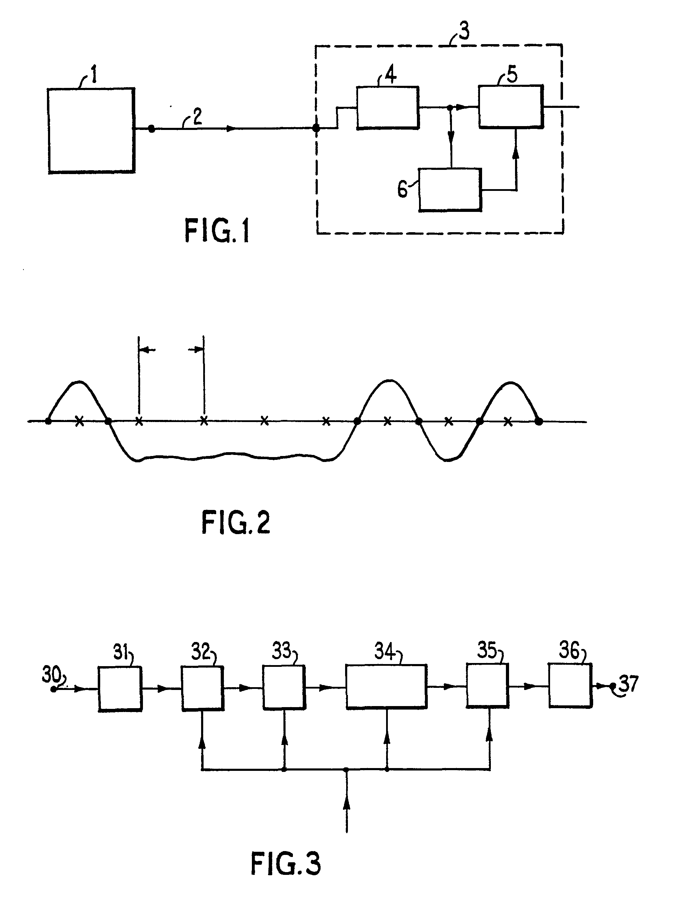

The basic structure of a transmission system for baseband binary data is shown in Figure 1 and comprises a transmitter 1 a transmission medium 2 and a receiver 3. The receiver 3 comprises a signal processor 4, a decision circuit 5 and a clock extraction circuit 6. The transmission medium may take any convenient form such as metallic conductors, a fibre optic link or the transmission may be by radio waves. For the sake of illustration it is assumed that the transmitted signal is in binary bipolar form modulated at the bit rate. The principles which are explained hereinafter can be applied directly to any of the wide variety of bipolar line codes. For ternary or pseudo-ternary codes it is necessary to make some modifications but the essential similarity remains. The signal appearing at the input to the decision circuit is shown in Figure 2. To reconstruct the data with the minimum of error and decision circuit should sample the signal at the times marked with a cross. The zero crossings, marked with a circle, are used as a reference and a stable clock generator is synchronised to them and drives the decision circuit. The synchronisation may be achieved by means of a phase-locked loop. With this method, a stable oscillator has its frequency controlled by the output from a phase detector which compares the phase of the oscillator output with that of the reference signal and produces a signal proportional to the relative displacement of the two zero crossings. The system tends to converge towards zero phase difference.

It has been tacitly assumed that the signal processing shown in Figure 1 comprises analogue circuitry. However, a digital signal processor can equally well be used if it is embedded in the structure shown in Figure 3.

As shown in Figure 3 the signal processor 4 has an input 30 to which the received signal is applied and which is connected to the input of a low pass filter 31. The output of the filter 31 is fed to the input of a sample and hold circuit 32 which output is connected to the input of an Analogue to Digital Converter (ADC) 33. The output of the ADC 33 is fed to a digital processor 34 where the received signal is processed to remove the transmission imperfections. The processed digital signal is then reconverted to an analogue signal in a digital to analogue converter (DAC) 35 and the analogue signal is passed through a low pass filter 36 to an output 37.

For the digital processor to work correctly three requirements must be satisfied. The pre-sampling filter 31 should restrict the spectrum at the input to within half the sampling frequency; the sampling, or processing, rate should be high enough to correctly reproduce the signal; and the post-sampling filter 36 should have a characteristic such that the effects of discrete-time processing on the output signal are not significant. Generally speaking, it is this last requirement which is most severe and has the most effect on the system design. The filter has to be of medium order, say 4 or 5, and have linear phase. Compromises are possible; the specification for the filter can be relaxed by incorporating its characteristic into the overall receiver response. However, this tends to curtail the designer's choices, in addition to detracting from the benefits of digital processing.

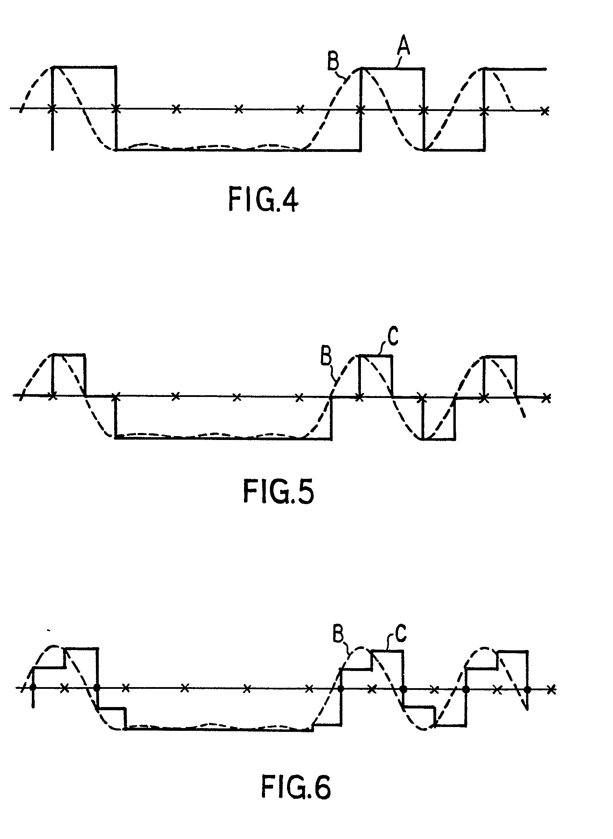

Returning to the processed received signal shown in Figure 2 and considering the decision process by which the binary data is regenerated it has been discovered that a continuous signal is not necessary. The only requirement is that the signal at the input to the decision circuit should be correct at the decision instant. Thus, so far as the data content of the signal is concerned the digital processing need only correct the received signal at these instants. This can be achieved by driving the processor with the derived clock. The discrete-time signal produced by sampling and processing the input signal at discrete time intervals related to the clock signal is shown in Figure 4 as curve A together with the continuous version, curve B.

Consideration of the discrete-time signal shows that the zero-crossings of the received signal are no longer explicitly available. There are zero-crossings but these are related to the receiver clock. Reconsidering the signal of Figure 2, it can be seen that the zero-crossings come halfway between adjacent data instants of opposite polarity. If, therefore, the digital processing occurs at twice the data rate some of the intermediate samples will be zero, or approximately so, thus representing the zero-crossings of the processed received signal. The new signal form is shown in Figure 5 as curve C, again together with the continuous version, curve B. Although this form of the signal still does not contain zero-crossings related to the zero-crossings of the continuous signal, it does contain information about the position of those zero-crossings relative to the sampling instants of the digital processor. If the sampling instants move from their correct position relative to the signal then those samples which are nominally zero will acquire some value proportional to the relative shift, Figure 6 shows the effect. One problem is that for the same shift in time the polarity of the relevant samples varies according to the polarity of the enclosing data bits. For example, if the sampling instants retard as in Figure 6 then the zero-crossing sample will have a negative value if the enclosing bit sequence is (1,0) but a positive value if the enclosing bit sequence is (0,1). However, this can be overcome by normalising the sign of these samples. If the enclosing sequence is (1,0) then it remains the same whereas in the case of (0,1) it is reversed. In this way, the zero-crossing samples give negative values for phase-retard and consequently can be used to control the receiver oscillator and correct the phase deviations. To obtain consistent performance it is necessary to normalise the signal amplitude since the magnitude of the samples is proportional to the signal amplitude as well as to the phase shift. However, this can easily be achieved using an automatic gain control (AGC) circuit.

Consequently the receiver oscillator can be locked to the received signal using the discrete-time signal at the output of the processor thus eliminating the post-sampling filter and its attendant complications.

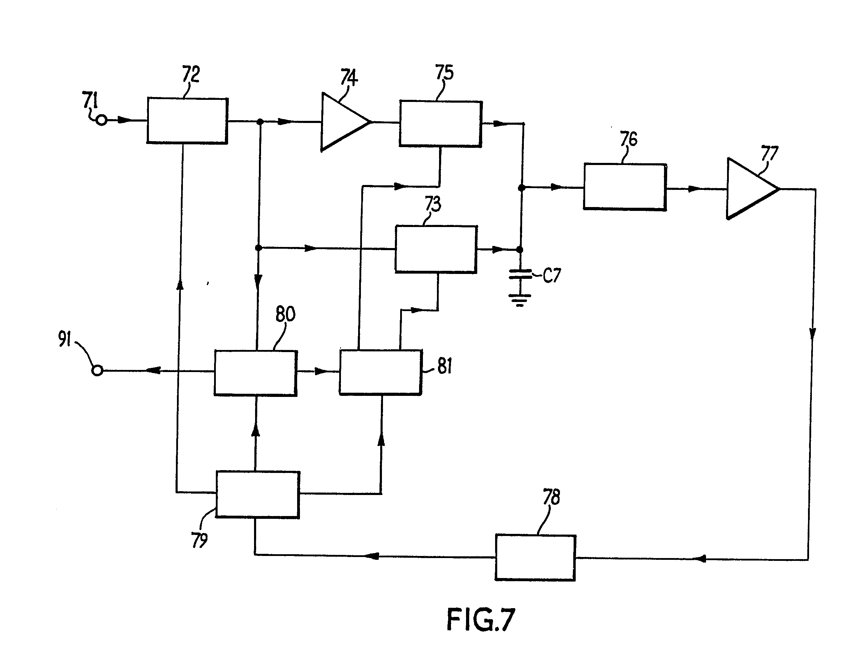

Figure 7 shows in block schematic form the receiver 3 of Figure 1 including an embodiment of apparatus according to the invention for deriving timing information from a received digital signal. As shown in Figure 7 an input terminal 71 to which, in operation, the received digital signal is applied is connected to a first input of a processing circuit 72. The output of the processing circuit 72 is fed to a first input of a decision circuit 80, to the input of a first sample and hold circuit 73 and through an inverting amplifier 74 to the input of a second sample and hold circuit 75. The outputs of the sample and hold circuits 73 and 75 charge a capacitor C7. The capacitor C7 is connected to the input of a low pass filter 76 whose output is fed to the input of a loop amplifier 77. The output of amplifier 77 is fed to a control input of a voltage controlled oscillator 78. The output of the oscillator 78 is fed to a timing generator 79 which may comprise a number of frequency divider stages and a decoding circuit and which produces clock pulses which are synchronised to the incoming data. The timing generator 79 has three outputs, the first being connected to a further input of the processing circuit 72, the second being connected to a further input of the decision circuit 80, and the third being connected to an input of a steering circuit 81. A first output of the decision circuit 80 is fed to a further input of the steering circuit 81 while a second output of the decision circuit 80 is fed to an output terminal 91 of the circuit arrangement. The steering circuit 81 has two outputs which are fed individually to the first and second sample and hold circuits 73 and 75.

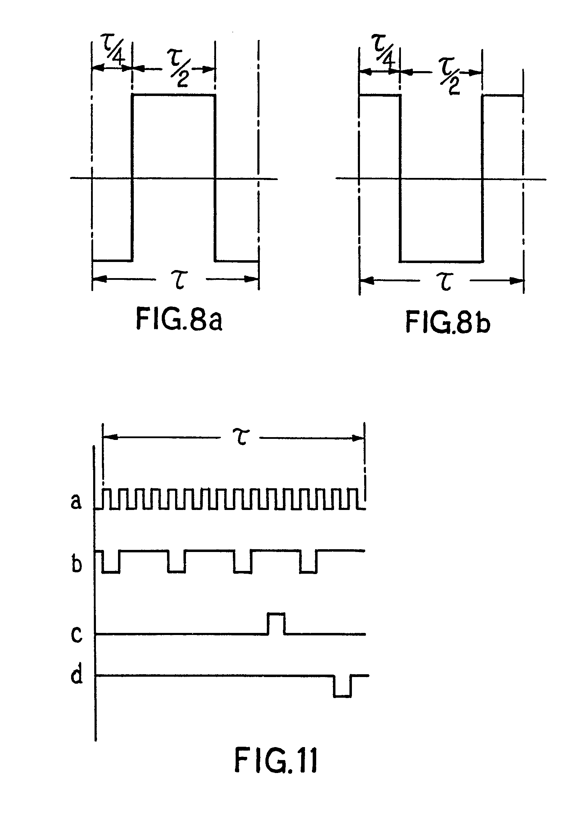

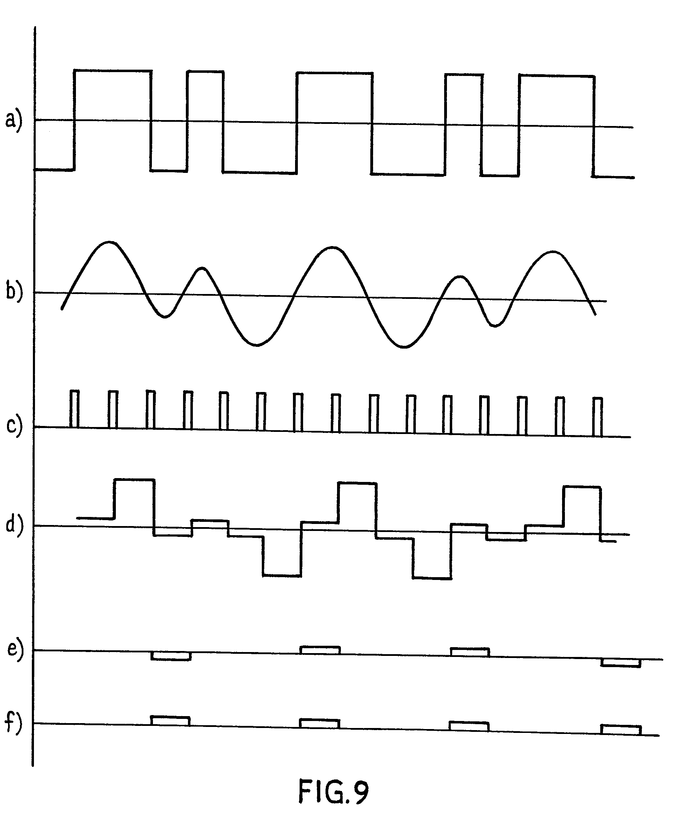

Figure 9 shows waveforms at various points in the circuit arrangement shown in Figure 7 when receiving an input data stream which has a 1001 binary sequence and which is encoded according to the WAL2 line code. In the WAL2 line code a binary 1 is represented as shown in Figure 8a) and a binary 0 is represented as shown in Figure 8b). In each bit period $T$ zero crossings occur $T/4$ and $3$ $T/4$ after the start of the bit period and the binary information is valid in the interval between the instants $T/4$ and $3$ $T/4$. Figure 9a) shows the originally encoded waveform of the 1001 sequence while Figure 9b) shows the waveform as it appears after the passage of the encoded waveform through a typical cable section and this waveform (b) in Figure 9 is that which is applied to the input terminal 71. Timing pulses as shown in Figure 9c) cause the input signal to be sampled at a rate of four times the bit frequency, the timing pulses being derived from those applied to the processing circuit 72 by the timing generator 79. Figure 9d) shows the signal at the output of the processing circuit 72 and this signal is fed to the decision circuit 80 and to the first sample and hold circuit 73 and an inverted version is fed to the second sample and hold circuit 75. Figure 9e) shows the output of the processing circuit 72 at the instants at which the timing signal is applied to the steering circuit 81. As can be seen this signal may be either positive or negative depending on whether a binary '0' or '1' has been received. The steering circuit 81 is therefore fed with a signal from the decision circuit 80 so that a clock signal is applied to the appropriate one of the sample and hold circuits 73 and 75. In this way the capacitor C7 is always charged in the same direction for a given phase difference between the input signal and the timing signal applied to the processing circuit 72, the charge applied to the capacitor C7 being shown in Figure 9f).

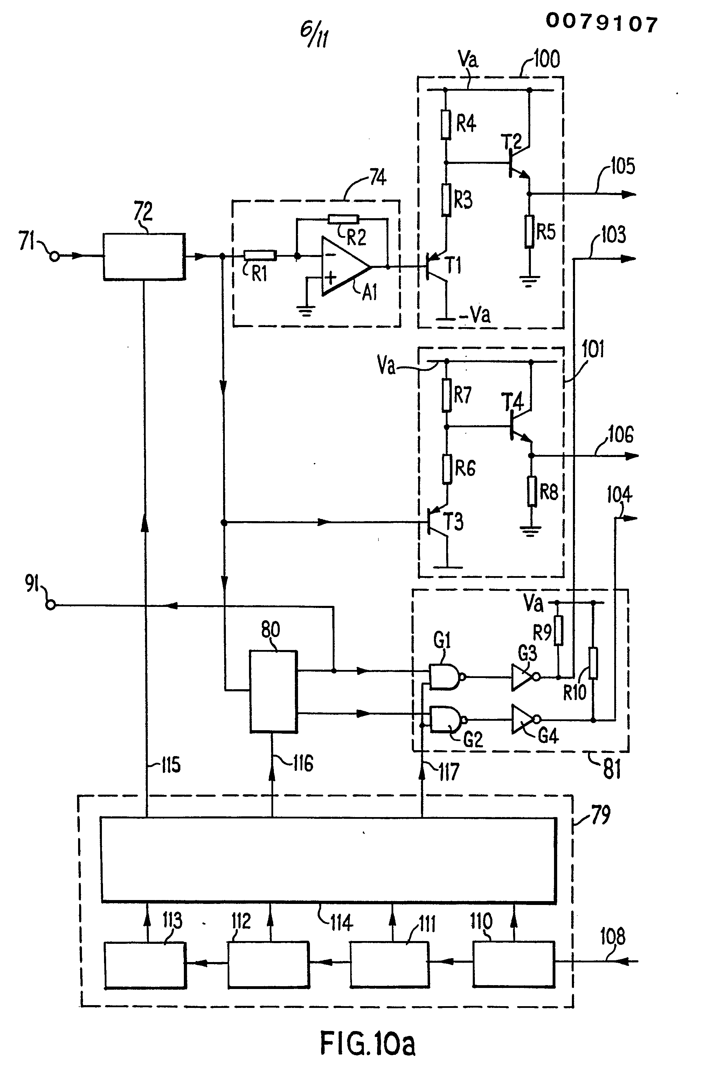

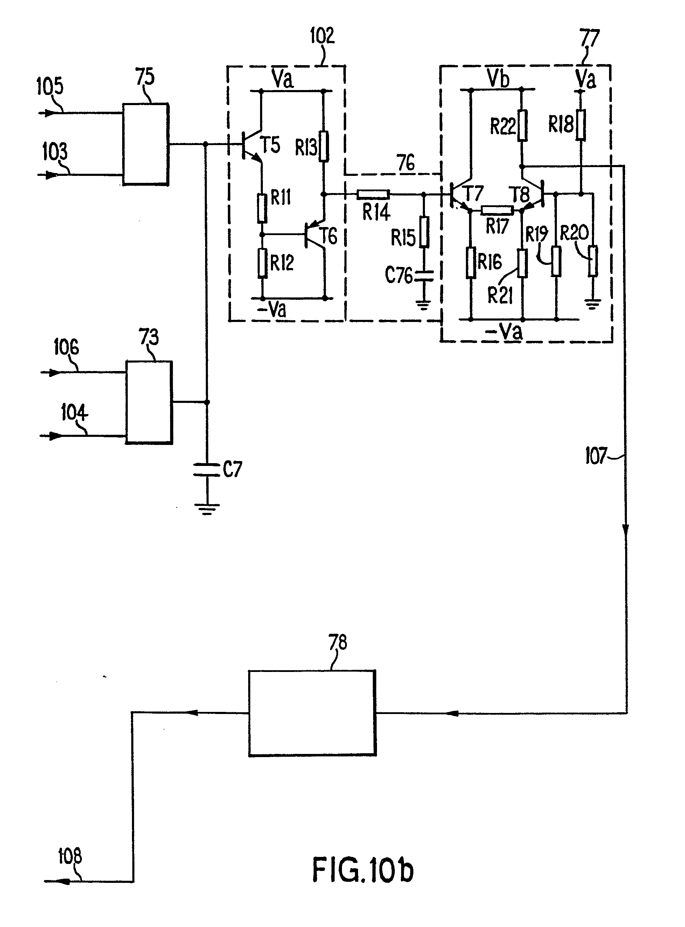

Figures 10a) and 10b) show a circuit diagram of an embodiment of the arrangement shown in Figure 7, those blocks having the same function in this embodiment as those in the embodiment shown in Figure 7 being given the same reference numerals. The inverting amplifier 74 comprises a resistor R1 connected between its input and the inverting input of a differential amplifier A1. A resistor R2 is connected between the output of the amplifier A1 and its inverting input while the non-inverting input is grounded. The output of the amplifier 74 is fed to the sample and hold circuit 75 via a level shifting circuit 100. Further level shifting circuits 101 and 102 are connected between the output of the processing circuit 72 and the sample and hold circuit 73 and between the outputs of the sample and hold circuits 73 and 75 and the loop filter 76. The reason for the level shifting circuits is that the sample and hold circuits 73 and 75 use CMOS switches which operate between 0 and 15 V supply rails and the level shifting circuits interface between the elevated signal voltages at the switches and the near to zero voltages in the surrounding circuits. The level shifter 100 comprises a pnp transistor T1 whose collector emitter path is connected in series with two resistors R3 and R4 between two supply rails Va and -Va, the base of transistor T1 forming the input of the level shifting circuit. The base of an npn transistor T2 is connected to the junction of resistors R3 and R4. The collector of transistor T2 is connected to the supply rail Va while its emitter is connected via a resistor R5 to ground and also forms the output of the level shifter 100 and is connected by line 105 to a first or signal input of the sample and hold circuit 75. Similarly the level shifter 101 comprises resistors R6, R7 and R8 and transistors T3 and T4 and has its input connected to the output of the processing circuit 72 and its output connected via a line 106 to a first or signal input of the sample and hold circuit 73.

The decision circuit 80 is in the form of a D-type clocked flip-flop and has its D input connected to the output of the processing circuit 72, its clock input connected to the second output of the timing generator 70, its Q output connected to the output 91 of the circuit arrangement and to a first input of a first NAND gate G1 which forms part of the steering circuit 81, and its $\overline{Q}$ output connected to first input of a second NAND gate G2 which also forms part of the steering circuit 81. The third output of the timing generator 79 is connected to second inputs of the NAND gates G1 and G2. The outputs of NAND gates G1 and G2 are fed to respective inverters G3 and G4 whose outputs on lines 103 and 104 are fed to second or clock inputs of the sample and hold circuits 75 and 73 respectively. Two pull up resistors R9 and R10 are connected between the outputs of inverters G3 and G4 and the supply rail Va.

The sample and hold circuits 73 and 75 both use the capacitor C7 to store the sampled voltage and both comprise an HEF 4066P CMOS switch, the lines 104 and 103 being connected to the respective switch control inputs. The stored voltage on the capacitor is fed through the level shifting circuit 102, the loop filter 76 and loop amplifier 77 to the control input of oscillator 78.

The level shifting circuit 102 comprises an npn transistor T5 whose base forms the input of the level shifting circuit 102 and whose collector emitter path is connected in series with two resistors R11 and 12 between the positive and negative supply rails Va and -Va. The junction of resistors R11 and R12 is connected to the base of a pnp transistor T6. The collector of transistor T6 is connected to the negative supply rail -Va while the emitter is connected via a resistor R13 to the positive supply rail Va and also forms the output of the level shifting circuit 102.

The loop filter 76 comprises a first resistor R14 connected between its input and output and the series arrangement of a resistor R15 and
a capacitor C76 connected between the output and ground.

The loop amplifier 77 includes first and second npn transistors
T7 and T8. The base of transistor T7 forms the amplifier input while
the collector is connected to a positive supply rail Vb and the emitter
is connected to the negative supply rail -Vb via a resistor R16 and
to the emitter of transistor T8 via a resistor R17. The base of
transistor T8 is connected to the junction of three resistors R18, R19
and R20. The other end of resistor R18 is connected to the positive
supply rail Va, the other end of resistor R19 is connected to the
negative supply rail -Va, and the other end of resistor R20 is
connected to ground. The emitter of transistor T8 is further connected
to the negative supply rail -Va via a resistor R21 while its
collector is connected to the positive supply rail Vb via a resistor
R22 and also forms the output of the amplifier 77 which is fed via a
line 107 to the control input of the voltage controlled oscillator 78.

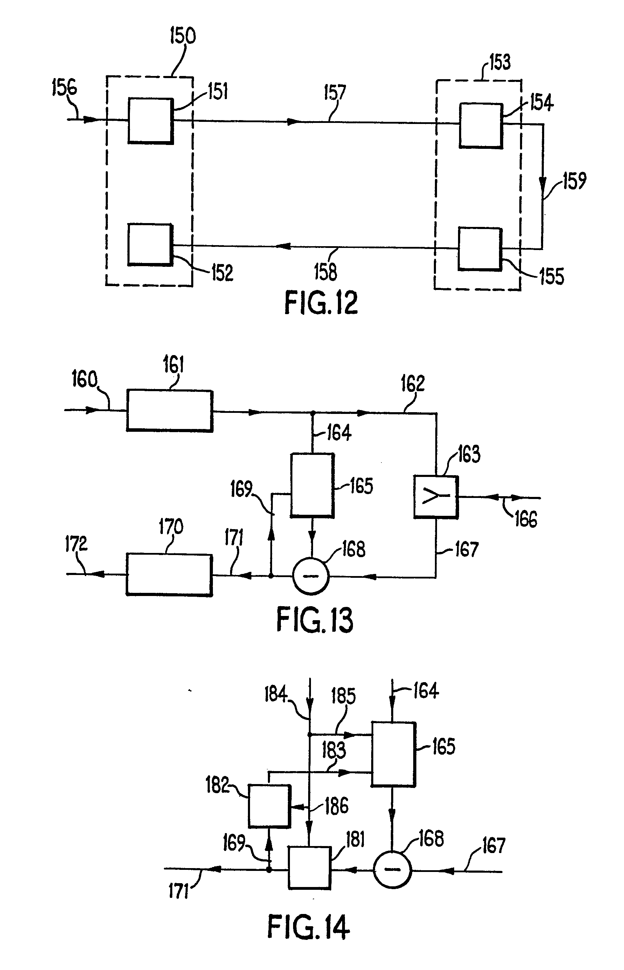

The output of the voltage controlled oscillator 78 is fed via a
line 108 to the input of the timing generator 79. The timing generator
79 comprises four binary dividers 110 to 113 arranged in cascade and a
4 line to 16 line decoder 114. In this way on the three output lines
115, 116, 117 clock pulses as shown in Figure 11b) c) d) respectively
may be obtained from the oscillator output which is shown in Figure 11a)
The frequency of the output of the oscillator 78 is arranged to be
sixteen times that of the bit frequency and hence sixteen cycles of
the oscillator output occur during the bit period $\Upsilon$. As can be seen
from Figure 11b) the clock pulses on line 115 occur at a frequency of
four times the bit rate. In order to produce the clock pulse shown in
Figure 11b) it is necessary to OR four outputs of the decoder 114
to produce the signal on line 115. When the oscillator 78 is
synchronised with the incoming signal the processing circuit 72 will
sample the input signal at $\Upsilon/4$ intervals and hence at the zero
crossings which occur $\Upsilon/4$ and $3\Upsilon/4$ after the start of the bit period.
The clock pulse on line 116 which is shown in Figure 11c) occurs midway
between $\Upsilon/4$ and $3\Upsilon/4$ and clocks the D-type bistable 80 at that time
to transfer the information on the D input to the Q output. Thus at the output 91 a binary '0' or '1' will appear depending on the output
from the processing circuit 72 at the time of the clock pulse on line
116. This signal is stored by the bistable 80 and fed to the NAND
gates G1 and G2 so that when the clock pulse on line 117 (as shown
in Figure 11d) occurs the appropriate sample and hold circuit is
activated depending on whether a binary '0' or '1' has been detected.

It should be noted that with the circuit shown in Figures 7 and
10 it is possible to synchronise the timing generator 79 with the
incoming signal in one of two opposite phases. Only one of these
phases will be such that the clock pulses to the decision circuit 80
occur at the time the information from the processing circuit 72 is
valid. To resolve this problem it is necessary to include an
ambiguity detector to detect in which of the phases the arrangement
has locked and to cause the appropriate phase change or reframing
if necessary. An arrangement which could be used for this purpose is
described in U.K. Patent Application No. 2048016A.

If ternary or higher level codes are used it will be necessary
to detect the crossing of more than one decision level and a
corresponding  number of decision circuits or a multilevel decision
circuit will be required. The difference between the received
signal level and the corresponding decision level can then be used
to provide the control signal for the voltage controlled oscillator
78 in the same way as the difference between the received signal
level and the zero level is used for a binary input signal.

If simultaneous bidirectional transmission is required, i.e.
one transmission path is used for  carrying signals in opposing
directions simultaneously, then, in addition to imperfections in
the received signal due to the characteristics of the transmission
medium, there will be interference from the local transmitter. This
can be minimised through processing the signal by means of an echo-
canceller. The basic structure of one terminal is shown in Figure 13.
It should be noted that the processing needs for the two purposes are
completely distinct and for clarity of illustration it is assumed
that no processing is required to correct for the medium. A more
detailed schematic drawing showing the way that the echo-canceller interacts with the receiver is given in Figure 14. It can be seen from this that although the signal processing is not directly in the receiver path the effect of the digital processing is the same i.e. the corrected signal appears at the output of the sample and hold circuit in discrete-time form. The important difference with this processing configuration compared with the in-line arrangement is that the processor connects two separate transmission systems. Further, in order to simplify the processing its input is the binary data from the transmitter which is not band-limited and hence the processor is synchronised to the transmitter. Thus if the received data is not occurring at precisely the same rate as the transmitted data then the sampling instants will not be stationary with respect to the received signal and the method of phase detection described previously cannot be used.

However, in many cases the transmission rates for the two directions are identical; any system having the overall structure shown in Figure 12 will satisfy this criterion. In this configuration the transmitter at one end is timed from a master clock whereas at the remote end the transmitter is timed from the receiver clock which has been derived from the received signal. Thus the two directions are said to be operating homochronously. However, although the frequencies are identical there are clearly going to be phase shifts between the various clock signals. At the remote end these are non-existent since there is only one clock source but at the originating end the phase difference between the receiver clock and the master clock will depend on the distance over which the signals are transmitted. Hence, in addition to locking the receiver oscillator to the signal it will be necessary to adjust the phase difference between the two clocks. This can be done by means of the method described hereinbefore. Thus the described method of phase detection can be applied to bidirectional transmission systems using discrete-time digital processing to correct the received signal.

The application of a method and apparatus according to the invention for deriving a clock signal from a received digital signal which is sampled at discrete time intervals will now be described in more detail with reference to Figures 12 to 16 in order to illustrate____
how it can be applied to bidirectional transmission over a single
transmission channel.

Figure 12 shows a first terminal 150 comprising a transmitter
151 and a receiver 152 and a second terminal 153 comprising a
receiver 154 and a transmitter 155. The transmitter 151 is fed by
a master clock signal on a line 156. The master clock generator may
be integral with the terminal 150 or may be an external clock
generator serving a plurality of terminals. The terminal 150 may
typically be sited at a telephone exchange and the transmission link
between the first and second terminals may then be the normal speech
pair which links a subscriber to the exchange. In Figure 12 two
separate links 157 and 158 are shown connecting the terminals 150
and 153 but in practice the links 157 and 158 are shown connecting
the terminals 150 and 153 but in practice the links 157 and 158
comprise a single transmission channel with bidirectional signal flow.
They are shown in Figure 12 as separate links merely in order to
simplify the explanation of the flow and derivation of the clock
signals. Within the terminal 153 the clock signal is derived from
the incoming signal by the receiver 154 and is fed via a link 159 to
the transmitter 155. Thus within the terminal 153 the same clock
signal, which is derived from the received signal, is used within
both the receiver 154 and transmitter 155. In the terminal 150 the
transmitter 151 receives the master clock while the receiver 152
will derive a clock signal from the input signal on link 158. This
will have the same frequency as the master clock signal but will have
a variable phase difference which is dependent on the length of the
transmission link between the two terminals.

When using an echo-canceller it is arranged that the master
clock feeds the transmitter while a delayed version feeds the echo-
canceller and receiver so that the danger of clocking the echo-
canceller when data is changing may be eliminated. This is achieved
by only allowing the phase of the delayed clock to vary in steps
equal to one period of the master clock and using one edge of the master
clock output to clock the transmitter and the other edge to clock the echo canceller and receiver. It should be noted that the master clock output frequency is divided before being fed to the transmitter echo canceller and receiver. The desired degree of precision of phase adjustment can be achieved by choice of the master clock frequency and divider factors.

Figure 13 illustrates the basic structure of a bidirectional terminal including an echo canceller. Input data is fed via a line 160 to a transmitter 161 and then via a line 162 to a first port of a hybrid circuit 163 and via a line 164 to a first input of an echo canceller 165. Data to be transmitted from the terminal is routed through the hybrid circuit 163 to a bidirectional transmission link 166 which is connected to a second port of the hybrid circuit 163. Data received by the terminal from the transmission link 166 is routed through the hybrid circuit 163 from the second port to a third port which is connected to a line 167 the other end of which is connected to a first input of a subtractor 168. The output of the echo canceller 165 is connected to a second input of the subtractor 168 while the output of the subtractor 168 is connected to a second input of the echo canceller 165 via a line 169 and to the input of a receiver 170 via a line 172. The hybrid circuit 163 may comprise a hybrid transformer or may be realised as an active hybrid as is known in the art. The performance of known hybrid circuits while adequate for the bidirectional transmission of speech do not provide sufficient isolation of the transmitted and received signals when data is being sent over the transmission link 166. The echo canceller 165 is included to improve the separation between the transmitted and received signals.

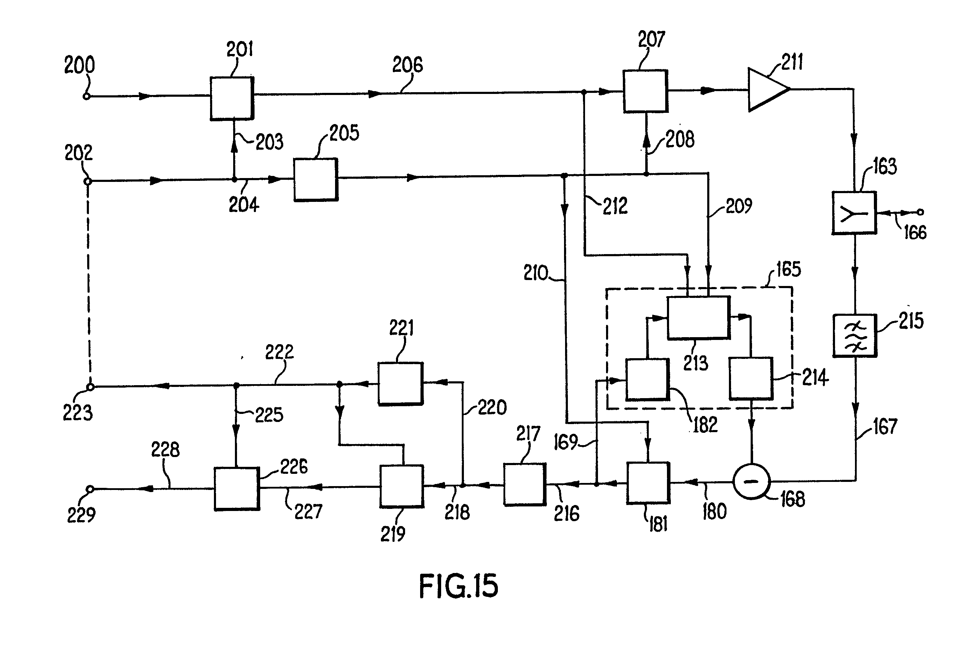

Figure 14 shows the line 167 on which the input signal is received and which is connected to the first input of the subtractor 168 the output of which is fed via a line 180 to the signal input of a sample and hold circuit 181. The output of the sample and hold circuit 181 is fed via the line 171 to the input of the receiver and via the line 169 to the input of an analogue to digital converter 182. The output of the analogue to digital converter 182 is fed via a line 183 to the second input of the echo canceller 165. Data from the transmitter 161 is fed via line 164 to the first input of the echo canceller 165. The transmitter clock is applied via a line 184 to the clock input of the sample and hold circuit 181, via a line 185 to the clock input of the echo canceller 165, and via a line 186 to the clock input of the analogue to digital converter 182. The way in which the arrangement of Figure 14 interacts with the rest of the terminal 153 is illustrated in Figure 15.

In Figure 15 the two links 157 and 158 shown in Figure 12 are combined as a single link 166 which is connected to a port of the hybrid circuit 163. Data is fed via a terminal 200 to a scrambler circuit 201 to ensure minimal correlation between transmitted and received data. A clock signal is applied to a terminal 202 and is then fed via a line 203 to a clock input of the scrambler 201 and via a line 204 to a frequency multiplying circuit 205 which produces a further clock signal at its output which has four times the frequency of the clock signal applied to terminal 200. Alternatively the frequency of the clock signal at terminal 202 may be four times the bit frequency and a divide by four circuit connected in line 203 with the frequency multiplier 205 omitted. The output of the scrambler 201 is fed via a line 206 to the input of a coder 207 which produces a transmission code from the scrambled data with the aid of the further clock signal which is applied via a line 208. The coder 207 is arranged in this instance to encode the data according to the WAL2 code as illustrated in Figure 8. The further clock signal is also applied via a line 209 to the echo canceller 165 and via a line 210 to the sample and hold circuit 181. The output of the coder 207 is fed to the transmission link 166 via a line driver circuit 211 and the hybrid circuit 163. The output of the scrambler 201 is also fed, via a line 212 to an input of the echo canceller 165. The echo canceller 165 comprises an analogue to digital converter 182, a processor 213 and a digital to analogue converter 214.

A signal received on link 166 is fed via the hybrid circuit 163 and a bandpass filter 215 to one input of the subtractor 168, the output of the echo canceller 165 being fed to the other input of the subtractor 168. The output of the subtractor on line 180 is fed to the sample and hold circuit 181 which samples the signal on line 180 under the control of the clock signal on line 210. The output of the sample and hold circuit 181 is fed <u>via</u> the line 169 to the analogue to digital converter 182 which forms part of the echo canceller 165 and <u>via</u> a line 216 to the input of an AGC circuit 217. The output of the AGC circuit 217 is fed <u>via</u> a line 218 to a decision circuit 219 and <u>via</u> a line 220 to a clock extraction circuit 221. The output of the clock extraction circuit 221 is fed <u>via</u> a line 222 to an output terminal 223, <u>via</u> a line 224 to the decision circuit 219, and <u>via</u> a line 225 to a descrambler 226. The output of the decision circuit 219 is fed <u>via</u> a line 227 to the descrambler 226 while the output data from the descrambler 226 is fed <u>via</u> a line 228 to a terminal 229.

The hybrid circuit 163 suppresses the unwanted transmitter signal while the filter 215 performs several functions. The low frequency cut-off is arranged to suppress residual interference from an audio band channel when data and speech are being simultaneously transmitted over the same link. The high frequency cut-off is arranged to be at twice the bit frequency to limit the spectrum of the frequency present at the input on line 169 to the echo canceller 165 which is a sampling system. In addition it provides the required shaping of the receiver amplitude-frequency characteristic to minimise the sensitivity to crosstalk and noise. The filtered signal on line 167 is applied to the subtractor 168 where the echo replica generated by the echo canceller 165 minimises the unwanted part of the signal, i.e. the transmitter signal which leaks across the hybrid circuit and any reflected signals due to impedance mismatches on the link 166. As the sample and hold circuit 181 is in the receiver section it is not necessary to filter the output from the echo canceller 165. The stepped waveform from the sample and hold circuit 181 is fed to the AGC circuit 217 to normalise the signal amplitude before applying the received signal to the clock extraction circuit 221 and decision circuit 226.

Basically the echo canceller is an interpolating adaptive digital filter having as its input the scrambled binary data and providing at its output the required echo replica at a sampling rate of four times the bit rate. This sampling frequency is necessary because the desired part of the WAL2 spectrum extends to twice the bit frequency.

The sampling frequency may be different if the data is encoded differently. The binary data can be used instead of the coded data provided that the coder is linear. The filter co-efficients are adjusted according to the degree of correlation between the sampled and quantised output of the sample and hold circuit, i.e. the output of the subtractor, and the transmitter data stream. A fully integrated echo canceller for use in baseband data transmission has been described in a paper by N.A.M. Berhoek et. al. entitled "Digital echo cancellation for baseband data transmission" which was published in the Transactions IEEE on Acoustics, Speech and Signal Processing, Volume ASSP 27 at page 768 et. seq.

The processed signal which is fed on line 216 to the AGC circuit 217 comprises the signal received on line 166, the signal produced by the transmitter within the terminal being substantially eliminated from the received signal by means of the hybrid circuit and the echo canceller. The processed signal is fed, after its amplitude has been normalised by the AGC circuit 217, to the clock extraction circuit 221 and the decision circuit 219. The clock extraction circuit 221 and the decision circuit 219 comprises the arrangement shown in Figure 7, the processing circuit 72 in that Figure being equivalent to those parts of the receiver up to the output of the AGC circuit 217 including the echo canceller 165.

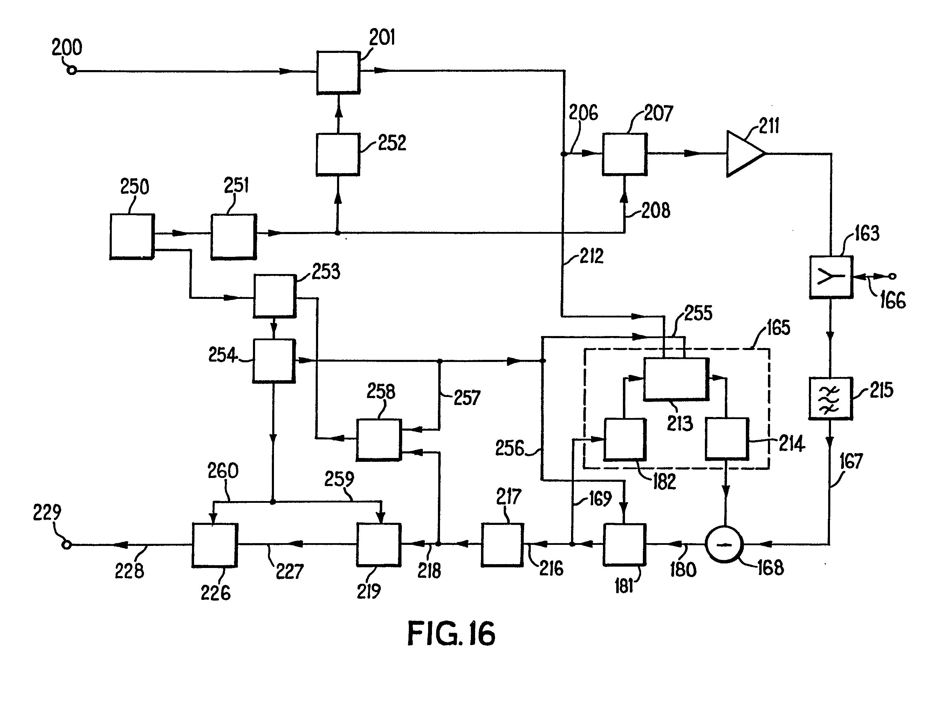

The derived clock signal is available on terminal 223 which is linked to terminal 202 to provide the clock signal for the transmitter of the terminal. Thus the transmitter and receiver clocks are tied together and derived from the input signal. This arrangement is suitable for the terminal 153 of Figure 12 but in the terminal 150 where the original clock signal generator is located the transmitter is fed from the master clock whereas the received signal clock will be delayed by a period dependent on the length of the transmission link between the terminals. Figure 16 shows an arrangement for the terminal 150 in which the transmitter is fed by the master clock while the receiver and echo canceller are fed by a delayed version of the master clock the amount of delay being adjustable and being arranged to be synchronised with the received clock. In Figure 16 those elements having the same function and structure as those in Figure 15
have been given the same reference numerals. A master clock generator
250 has a first output connected to the input of a divider 251 which
provides a clock signal for the coder 207 on line 208 and a further
divider 252 whose output is connected as a clock signal for the
scrambler 201. A second output of the master clock generator 250 is
connected to the input of a pulse deleter 253 whose output feeds a
timing generator 254. The first and second ouputs of the master
clock generator 250 provide signals which are equal in frequency
but one is inverted with respect to the other. The timing generator
is connected _via_ a line 255 to the clock input of the echo canceller
165, _via_ a line 256 to the control input of the sample and hold
circuit 181, _via_ a line 257 to a first input of a phase comparator
258, _via_ a line 259 to the clock input of the decision circuit 219,
and _via_ a line 260 to the clock input of the descrambler 226.
The output of the AGC circuit 217 is connected to the second input
of the phase comparator 258 whose output is connected _via_ a line 262
to the control input of the pulse deleter 253.

As can be seen from Figure 16 the transmitter is fed from the master
clock generator 250 through the divider circuits 251 and 252. The
divider circuits cause the coder 207 to be clocked at four times the
rate of the scrambler circuit. This is a function of the particular
encoding system where transitions of the WAL2 code may occur at
intervals equal to a quarter of the bit period. The receiver and
echo canceller clock is derived from the timing generator 254 which in
turn is driven by the master clock generator 250.

The output of the master clock generator 250 which feeds the
divider circuit 251 is inverted relative to that which feeds the pulse
deleter 253. This ensures that if the transmitter and the receiver and
echo canceller are all clocked by the same clock transition then the
transmitter and echo canceller are never clocked at the same instant
since their clocking transitions are at least half the period of a
clock cycle of the clock pulse generator apart. The phase comparator
may comprise that part of Figure 7 between the output of the processing
circuit 72 and the control input of the VCO 78, the amplifier 77 being

a limiting amplifier to provide a logic signal for a pulse deleter 253 which is inserted between the clock generator 250 and the timing generator 254 to adjust the phase of the timing generator output to match that of the received signal. The pulse deleter 253 is controlled by the phase comparator 258 which compares the phase of the received clock and the output on line 257 of the timing generator.

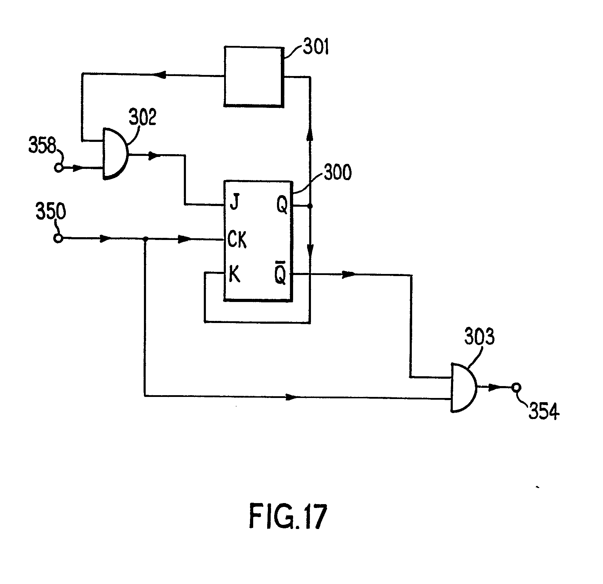

Figure 17 illustrates one form the pulse deleter 253 may take. The pulse deleter comprises a J-K flip-flop 300, a monostable multivibrator 301 and two AND gates 302 and 303. A terminal 350 which receives the clock signal from the master clock generator 250 is connected to the clock input of the flip-flop 300 and to a first input of the AND gate 303. The Q output of the flip-flop 300 is connected to its K input and to the trigger input of the monostable 301. The output of the monostable 301 is connected to a first input of the AND gate 302 whose output is connected to the J input of the flip-flop 300. A terminal 258 which receives a control signal from the phase comparator 258 is connected to the second input of the AND gate 302. The $\overline{Q}$ output of the flip-flop 300 is connected to the second input of the AND gate 303 whose output is connected to a terminal 354 and produces the clock signal which drives the timing generator 254.

When the locally generated clock signal is in phase with the clock derived from the received signal the output of the phase comparator is at a logic '0' and hence the J input of flip-flop 300 is at a logic '0'. Consequently the Q output is at a logic '0' and the $\overline{Q}$ output at a logic '1'. In this state the AND gate 303 is enabled and the clock pulses at terminal 350 are transferred to the output terminal 354.

When the locally generated clock is not in phase with the clock derived from the received signal the output of the phase comparator is at a logic '1' and hence the J input of the flip-flop 300 is at a logic '1' and on the next clock pulse the Q output goes to a logic '1' and the $\overline{Q}$ output to a logic '0'. The $\overline{Q}$ output inhibits the AND gate 303 and deletes a pulse from the clock signal. The Q output triggers the monostable 301 which inhibits AND gate 302 for a desired period so that only one clock pulse is deleted at a time. The period is determined by the time constant of the monostable 301 and may be nominally one or more periods of the derived clock. It should be noted that the master clock generator output which feeds the pulse deleter 253 is at a multiple of the clocking frequency applied to the transmitter, receiver, and echo canceller. The use of the monostable 301 to inhibit the AND gate 302 ensures that no further pulses are deleted until a further phase comparison between the locally generated and derived clock has been made.

CLAIMS:

1. A method of deriving a clock signal from a digitally processed received data signal which is available as a series of samples at discrete time intervals comprising the steps of sampling the signal at a multiple of the bit rate so that the signal is sampled at a time corresponding to nominal crossings of one or more decision levels of the received signal, using the sampled signal corresponding to the nominal crossings of the decision level(s) to control the frequency of an oscillator, and deriving the clock signal from the oscillator output.

2. A method according to Claim 1 in which the data is encoded in the WAL2 code and the received signal is sampled at four times the bit rate.

3. Apparatus for deriving a clock signal from a digitally processed received data signal which is available as a series of samples at discrete time intervals, the apparatus comprising means for sampling the received signal at a multiple of the bit rate so that the signal is sampled at a time corresponding to nominal crossings of one or more decision levels of the received signal, means for generating a control signal dependent on the magnitude of the signal samples at the time of nominal crossings of the decision level(s), means for applying the control signal to the control input of a controlled oscillator to vary the frequency of the output signal therefrom, and means for deriving the clock signal from the oscillator output signal.

4. Apparatus for deriving a clock signal from a digitally processed received data signal which is available as a series of samples at discrete time intervals, the apparatus comprising means for sampling the received signal at a multiple of the bit rate so that the signal is sampled at a time corresponding to nominal crossings of one or more decision levels of the received signal, means for generating a control signal dependent on the magnitude of the signal samples at the time of nominal crossings of the decision level(s), means for applying the control signal to a control input of a phase shifting circuit which is arranged to produce a phase shifted version of a clock signal applied to its input by a clock generator, the derived clock signal being available at the output of the phase shifting circuit.

5. Apparatus as claimed in Claims 3 or 4, arranged for deriving the clock signal from a received signal encoded according to the WAL2 code in which the multiple is four.

6. Apparatus as claimed in Claims 3 or 4, in which the means for generating the control signal comprises first and second sample and hold circuits, the sampled received signal being inverted before being fed to one of the sample and hold circuit and means for routing the received signal to either the first or the second sample and hold circuit dependent on the direction of the crossing.

7. Apparatus as claimed in Claim 6, in which the first and second sample and hold circuits have a common storage capacitor.

8. Apparatus as claimed in Claim 4, in which the phase shifting circuit comprises a pulse deleter.

9. A duplex data transmission terminal including apparatus as claimed in any of Claims 3 to 8.

10. A duplex data transmission terminal as claimed in Claim 9 when dependent on Claims 4 or 8 including an echo canceller and in which the clock generator drives the transmitter while the derived clock signal drives the echo canceller and receiver.

FIG.1

FIG.2

FIG.3

0079107

FIG.4

FIG.5

FIG.6

3-XI PHB 32830

0079107

FIG.7

FIG.8a

FIG.8b

FIG.11

FIG.9

5-XI  PHB 32830

0079107

FIG.10a

FIG.10b

FIG.12

FIG.13

FIG.14

FIG.15

FIG. 16

0079107

FIG.17

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 04 L 7/02 |
| X | IEEE TRANSACTIONS ON COMMUNICATIONS, vol. COM-20, no. 2, April 1972, pages 119-131, New York (USA); J.K.HOLMES: "Performance of a first-order transition sampling digital phase-locked loop using random-walk models". *Page 120, left-hand column, last paragraph - right-hand column, line 45; page 127, right-hand column, paragraph 1; figure 1* | 1,3,4 | |
| A | IEEE TRANSACTIONS ON COMMUNICATIONS. | 6,8 | |
| X | NATIONAL TELECOMMUNICATIONS CONFERENCE, 26th-28th November 1973, Atlanta, Georgia, Conference Record, IEEE Cat. no. 73 CHO 805-2NTC, pages 6E-1 to 6E-9, New York (USA); C.P.REDDY et al.: "An all digital phase locked loop for synchronization of a sinusoidal signal embedded in white gaussian noise". *Page 6E-1, left-hand column, last paragraph - page 6E-2, left-hand column, paragraph 2; figures 1,3* | 1,3,4 | **TECHNICAL FIELDS SEARCHED (Int. Cl. ³)**<br><br>H 04 L 7/02 |
| | --- -/- . | | |

The present search report has been drawn up for all claims

| Place of search | Date of completion of the search | Examiner |
|---|---|---|
| THE HAGUE | 12-01-1983 | STRASSEN TH.W. |

European Patent Office

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. 3) |
| A | NTG-FACHBERICHTE ISSLS 80, vol. 73, 1980, pages 36-40, Berlin (DE); M.G.VRY et al.: "The design of a 1+1 system for digital signal transmission to the subscriber". *Page 38, right-hand column, paragraph 2 - page 39, left-hand column, paragraph 1; figures 3,6* | 2,5,9, 10 | |
| | --- | | |
| P,X | US-A-4 333 060 (MOSLEY) *Column 3, line 41 - column 6, line 16; figures 1,2* | 1,3 | |
| | ----- | | |
| | | | TECHNICAL FIELDS SEARCHED (Int. Cl. 3) |
| | The present search report has been drawn up for all claims | | |

| Place of search THE HAGUE | Date of completion of the search 12-01-1983 | Examiner STRASSEN TH.W. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82